Europäisches Patentamt

(19) European Patent Office

Office européen des brevets

(11) **EP 0 760 251 A1**

(12) **EUROPEAN PATENT APPLICATION**

(43) Date of publication:
05.03.1997 Bulletin 1997/10

(51) Int. Cl.⁶: **B01D 71/48**, B01D 61/36,
C10G 31/11

(21) Application number: 96202343.8

(22) Date of filing: 23.08.1996

(84) Designated Contracting States:
AT BE CH DE DK ES FI FR GB GR IE IT LI NL PT
SE

(30) Priority: 25.08.1995 NL 1001061

(71) Applicant: **NEDERLANDSE ORGANISATIE VOOR
TOEGEPAST-NATUURWETENSCHAPPELIJK
ONDERZOEK
TNO
2628 VK Delft (NL)**

(72) Inventors:
• **Tinnemans, Aloijsius Henricus Antonius
3707 BG Zeist (NL)**
• **Buijs, Henricus Carolus Willibrordus Maria
2651 SL Berkel en Rodenrijs (NL)**
• **Koenhen, Dirk Marinus
7701 RS Dedemsvaart (NL)**

(74) Representative: **Kupecz, A., Drs. c.s.
Octrooibureau Los en Stigter B.V.
Weteringschans 96
1017 XS Amsterdam (NL)**

(54) **A membrane and method for the separation of aromatic hydrocarbons from a mixture of various aromatic hydrocarbons or from a mixture of such aromatic hydrocarbons and non-aromatic hydrocarbons**

(57) The invention relates to membranes and to a method for the separation of aromatic hydrocarbons from a mixture of various aromatic hydrocarbons or from a mixture of such aromatic hydrocarbons and non-aromatic hydrocarbons. According to the invention the membrane is formed from aromatic polyesters on the basis of aromatic diacid chlorides in combination with either bisphenol-A-like bisphenols, or a bisphenol which is completely built up of aromatic centres.

Preferably the membrane is formed from aromatic polyesters on the basis of aromatic diacid chlorides such as terephthaloyl chloride, isophthaloyl chloride, 5-t-butylisophthaloyl chloride, or PIDA in combination with bisphenol-A-like bisphenols, such as 4X-BPN, 4X-BPT, 4X-BPI.

Figure 1

Toluene in feed [w%]

## Description

The invention relates to a membrane for the separation of aromatic hydrocarbons from a mixture of various aromatic hydrocarbons or from a mixture of such aromatic hydrocarbons and non-aromatic hydrocarbons, as well as to a method for the separation of aromatic hydrocarbons from a mixture of various aromatic hydrocarbons or from a mixture of such aromatic hydrocarbons and non-aromatic hydrocarbons.

It is noted that aromatic hydrocarbons are generally separated from a mixture of aromatic hydrocarbons and aliphatic hydrocarbons by means of distillation and/or extraction. With respect to saving energy, these methods are inefficient in comparison with pervaporation. In particular if the aliphatic/aromatic components have similar vapour pressures so that they form azeotropes as, for instance the benzene-cyclohexane system, pervaporation is especially useful for the separation of mixtures which contain the aromatic component to be removed in low a concentration, namely at least lower than 50% by weight.

There are many polymer membranes which are known to exhibit a different solubility and transport behaviour compared with organic molecules, and many of these seem to be suitable as pervaporation membranes. Some of the membranes suggested to be suitable under pervaporation conditions include isotropic membranes, asymmetric membranes and thin-film composite membranes.

I. Cabasso (Organic liquid mixtures separation by permselective polymer membranes. 1. Selection and characterization of dense isotropic membranes employed in the pervaporation process, *Ind. Eng. Prod. Res. Dev., 22, 313-319 (1983)*), has studied alloy membrane films consisting of polymer mixtures based on cellulose acetate which may or may not be cross-linked, with a high degree of molecular entanglement due to interpolymeric mixing of two compatible networks. It was found, for instance, that when separating benzene/cyclohexane, a 20 μm film of cellulose acetate/poly[styrene(diethyl)phosphonate] exhibited selectivities up to 12-40 with the corresponding fluxes up to 0.8-1 $kg \cdot m^{-2} \cdot hour^{-1}$ for a 50/50% by weight mixture. However, the development of high flux anisotropic membranes based on the above-mentioned attractive materials did not prove to be a success.

A number of patents to the name of Exxon (EP 0 312 374, EP 0 312 375, EP 0 312 379, US 5,063,186, EP 0 312 376, US 5,030,355, EP 0 312 377, EP 0 312 378, US 4,929,357, US 4,983,338) and Bayer (EP 0 398 093, EP 0 336 241, US 4,115,-465, DE 3,927,787) show that basically polyurethane elastomers or their alloys are suitable as pervaporation membrane materials for the separation of aromatic and aliphatic hydrocarbons. Both anisotropic elastomer membranes and thin-film composite membranes have been described. In the latter case a thin active selective layer (< 1μm) is applied to a microporous carrier substrate by suspension deposition or by deposition from solution, allowing the solvent to evaporate and/or allowing it to pass through the thick permeable carrier layer. The membrane's properties are comparable to those described above. However, an important disadvantage is that in particular the selectivity is too low to eliminate small quantities of aromatic volatile components from aliphatic mixtures.

Only few systematic studies have been carried out to determine the relationship between the chemical properties of a membrane and its separation ability. For instance, the performance of elastomeric polyurethane membranes is dominated by the physicochemical properties of the soft segment matrix phase of the non-porous separation layer, in particular the chemical composition, the ratio hard and soft segments, cross-linking density and the glass transition temperature (H. Ohst, K. Hildenbrand, R. Dhein, Polymer structure/properties-correlation of polyurethane PV-membranes for aromatic/aliphatic separation, *Proceedings of the 5th International Conference on Pervaporation Processes in the Chemical Industry*, Heidelberg, Germany, March 11-15, 1991).

The capacity of polyurethane-imide membranes to separate aromatics and non-aromatics has also been examined (B.A. Koenitzer, US 4,929,358 to Exxon Research and Engineering Co., Polyurethane-imide, membranes and their use for the separation of aromatics from non-aromatics).

Polyimide/aliphatic polyester copolymers having various hard and soft segments (US 4,990,275, US 4,994,880), as well as polyimide/aliphatic polyesters copolymers without carboxyl groups (US 5,241,039) have been evaluated as membrane material. The advantage of all these materials is, for instance, that they have a higher aromatic/saturated selectivity than polyurethanes. It is noted that only polymer films have been evaluated.

Other membrane materials very recently patented by Exxon comprise polyesters (US 4,976,868), polyarylates (US 5,012,036), sulphonated polysulphons (US 5,055,631), polycarbonates (US 5,019,666) and polyphthalate carbonates (US 5,012,035), thermically cross-linked nitrile-rubber membranes (US 4,885,096) and multi-block polymers (PCT/US 91/08494, US, 5,039,417, US 5,039,418, US 5,039,422, US 5,049,281) having a first prepolymer - an imide or amide acidic prepolymer (US 5,039,417), an oxazolidon prepolymer (US 5,039,418), a urea prepolymer (US 5,039,422) or a prepolymer produced by combining epoxy with diamine ((US 5,049,281) - which was extended with a compatible second prepolymer. For instance, pervaporation experiments of toluene/i-octane (50/50% by w/w) at 100°C have shown, that cross-linked polycarbonate films (thickness 30-50 μm) possess separation factors (β) of 34-77 and a flux rate of 66-7,7 $kg \cdot \mu m \cdot m^{-2} \cdot h^{-1}$.

Recently an article appeared about the use of a membrane formed from plasma-polymerizing monomers (US 5,207,909). According to a preferred embodiment the membrane is a plasma polymer film, formed from plasma which is able to polymerize the 2,4-pentane-dion monomer. For instance, pervaporation experiments of toluene/i-octane (50/50% by w/w) at 100°C show, separation factors ($\beta$) of 35 and a flux of 1.2 kg $\cdot$ $\mu$m $\cdot$ m$^{-2}$ $\cdot$ h$^{-1}$ at a feed pressure of 1 bar.

The permeation and pervaporation behaviour of benzene-cyclohexane mixtures was also examined by using poly[bis(2,2,2-trifluoroethoxy)phosphazene] membranes (F. Suzuki, K. Onozato, H. Yeagashi, Pervaporation of organic solvents by poly[bis(2,2,2-trifluoroethoxy)phosphazene] membrane, *J. Appl. Polym. Sci. 34, 2197 (1987)*. The separation properties of this membrane are comparable with the polyphosphonate membranes of Cabasso et al. (I. Cabasso, J. Jagur-Grodzinski, D. Vofsi, A study of permeation of organic solvents through polymeric membranes based on polymeric alloys of polyphosphonates and acetyl cellulose. II. Separation of benzene, cyclohexene, and cyclohexane, *J. Appl. Polym. Sci., 18, 2137 (1974);* I.Cabasso, J. Jagur-Grodzinski, D. Vofsi, Polymeric alloys of phosphonated polystyrene or polyphenylene oxide with cellulose ester, polystyrene, or unsaturated polyester, US 4,073,754) having a separation factor of 12. The permeation fluxes of pure benzene and pure cyclohexane were 7.0 and 0.46 kg $\cdot$ $\mu$m $\cdot$ m$^{-2}$ $\cdot$ h$^{-1}$ respectively.

As alternative, US 4,802,987 discloses moreover the application of liquid membranes for the separation of aromatics from saturated hydrocarbons by using cellulose or cellulose acetate membranes impregnated with polyethylene glycol. In order to obtain high aromatic selectivity and high flux, the amount and type of polyethylene glycol must be carefully adjusted.

Apart from the above-mentioned examples, the pervaporation method was also successfully applied for the separation of alkyl aromatics from aromatic solvents and for the separation of alkyl aromatic isomers by using preferably asymmetrical, dense polyimide membranes (EP 0 160 140).

The separation of aromatic hydrocarbons from mixtures of aromatic and non-aromatic hydrocarbon mixtures under pervaporative conditions was improved by controlling the oxygen present in the feed mixture (US 5,095,171), for instance by adding small amounts of oxygen scavengers, such as hindered phenols, to the starting mixture.

Other methods for the separation of aromatic hydrocarbons from mixtures of aromatic and non-aromatic hydrocarbons use membranes under reversed osmosis, perstraction or pervaporation conditions (J.R. Sweet, C.P. Darnell, GB 2,268,186 to EXXON Research and Engineering Co., Membrane/hydrocracking process for improved feedstock utilization in the production of reduced emissions gasoline) or under perstraction conditions, for instance, for the removal of multi-ring aromatics from the lubrication distillate (L.E. Black, R.C. Schucker, US 4,962,271 to EXXON Research and Engineering Co., Selective separation of multi-ring aromatic hydrocarbons from distillates by perstraction).

For a more detailed explanation of the terms perstraction and pervaporation reference is made to the US patent 5,055,631 column 2, from line 23.

It is the aim of the invention to provide membranes which are suitable for the separation of aromatic hydrocarbons from a mixture of various aromatic hydrocarbons or from a mixture of such aromatic hydrocarbons and non-aromatic hydrocarbons having good selectivity and flux.

To this end the invention provides membranes for the separation of aromatic hydrocarbons from a mixture of various aromatic hydrocarbons or from a mixture of such aromatic hydrocarbons and non-aromatic hydrocarbons, characterized in that the membrane is formed from aromatic polyesters on the basis of aromatic diacid chlorides in combination with either bisphenol-A-like bisphenols, or a bisphenol which is completely built up of aromatic centres.

The membrane according to the invention is preferably formed from aromatic polyesters on the basis of aromatic diacid chlorides such as terephthaloyl chloride, isophthaloyl chloride, 5-t-butylisophthaloyl chloride, or PIDA in combination with bisphenol-A-like bisphenols, such as 4X-BPN, 4X-BPT, 4X-BPI, PID. The typical method for the preparation of this polyester can be found in US 5,007,945.

| Bisphenol | | Abbreviation (X = substituent) |
|---|---|---|
| 1) | | 4X-BPN<br><br>X = H. Br |
| 2) | | 4X-BPT<br><br>X = H. Br |
| 3) | | 4X-BPI<br><br>X = H. Br, Cl. CH$_3$ |
| 4) | | PID |
| 5) | | PIDA |

Especially suitable are membranes formed from aromatic polyesters having a backbone based on one or more phenyl centres with flexible side chains.

Preferably the flexible side chain consists of $C_1$-$C_{12}$ alkyl or $C_1$-$C_{12}$ alkoxy having one or more hydrogen atoms such as O and S in the alkyl chain.

Usually the aromatic polyester having a backbone is formed from hydroquinone and aromatic diacid chlorides such as 2,5-di$C_1$-$C_{12}$ alkoxyterephthaloyl chloride with hexyloxy, 1-hexenyloxy, dodecyloxy or 6-(pentyloxy)hexyloxy side chains.

It is particularly useful to form the aromatic polyester with backbone from aromatic diols (hydroquinone, 2',5'-di$C_1$-$C_{12}$ alkyl-$p$-terphenyl-4,4"-diol) or 2',5'-di$C_6$-$C_{12}$ alkyl-$p$-terphenyl-4,4"-dicarboxylic acid chloride.

It is extremely useful to modify the membrane by thermal treatment or irradiation.

If the membrane is to be modified by irradiation, then this is preferably done by means of electrons.

If the membrane is to be modified by thermal treatment, then the membrane is heated to up to 100-180°C.

Advantageously thermal treatment takes place under vacuum or under atmospheric conditions.

The membrane according to the invention is especially suitable for utilization as composite membrane, where the membrane is applied to a carrier which, with regard to the mixture to be separated, is an inert carrier.

The inert carrier is usually an aromatic polyamide, polyimide or polyether amide material.

The carrier is preferably applied to an inert non-woven, such as PET, PP and preferably PPS.

The invention further relates to a method for the separation of aromatic hydrocarbons from a mixture of various aromatic hydrocarbons or from a mixture of such aromatic hydrocarbons and non-aromatic hydrocarbons characterized in that the membrane is formed from an aromatic polyester on the basis of aromatic diacid chlorides in combination with either bisphenol-A-like bisphenols, or a bisphenol built up completely from aromatic centres.

Usually mixtures containing at least 1% by weight of aromatic hydrocarbons were used.

As a rule, the aromatic hydrocarbons separated in accordance with the invention are benzene, alkyl aromatics, such as toluene, etc.

It is noted that the membrane according to the invention is prepared according to a method of the prior art.

The membrane itself may occur in a variety of configurations and may be applied in a variety of shapes. The membrane may be flat or tubular. Flat membranes may be used rolled up into a spiral or as flat plates. Tubular and hollow fibre membranes, on the other hand, may be used in a bundled configuration.

A pervaporation test device was used having four membrane cells, which device was designed and constructed such that characterization of the membranes could be carried out on laboratory scale, with controllable concentration polarization and at a temperature up to 120°C.

The permeate was collected for analysis in a container, cooled with liquid nitrogen. Only a little of the permeate is extracted in order to minimize the effects of concentration polarization and temperature loss for the benefit of the pervaporation process. The downward permeate pressure is kept constant within 2 mbar with the aid of a vacuum pump and a valve provided between the condensers and the pump.

The basic properties of the membrane were determined by measuring the permselectivity with toluene/i-octane mixtures composed at ratios of 50/50 to 5/95% by w/w. Measurements commenced after allowing the membrane film to acclimatize in the test cell for 1 hour at 90°C. The actual duration of the determination was usually 1 to 5 hours, depending on the permeate flux.

In the event that the experiment lasted several days, the vacuum was cancelled at the end of each working day, the temperature of the feed mixture was brought to ambient temperature, while the mixture was kept in contact with the membrane surface.

Preceding the experiment the membrane was conditioned by allowing the film first to swell in a toluene-i-octane mixture of 5/95% w/w during 24 hours at 90°C, unless stated otherwise. This swelling time is presumed to suffice for the film to reach optimal swelling.

The composition of the mixture and of the permeate samples was determined by refractometry. The permeate fluxes were determined by weighing the permeate samples in the cold trap.

The required capacity of a membrane for the pervaporation of a toluene/i-octane mixture is expressed by a separation factor $\beta$. The separation factor $\beta$ is defined as

$$\beta_{pervap} = \beta(toluene/i\text{-}octane) = \frac{C_{toluene}^{P}}{C_{i\text{-}octane}^{P}} \bigg/ \frac{C_{toluene}^{F}}{C_{i\text{-}octane}^{F}} \text{ or } C_{tol}^{P} / (1 - C_{tol}^{P}) / C_{i\text{-}oct}^{F} / (1 - C_{i\text{-}oct}^{F})$$

The specific permeation fluxes are expressed by:

$$F_{total} = [m_{total} * l] / [A * t] \ [kg.\mu m.m^{-2}.h^{-1}]$$

m is the total amount of collected permeate [kg]

l is the membrane thickness [μm]

A is the membrane surface [m²]

t is time [h]

The specific permeate fluxes are used to compare various polymer film materials, assuming the flux of the permeate to be inversely proportional to the membrane thickness.

Finally, it is noted that the membranes according to the invention are formed according to a method of the prior art, which is as follows.

A suitable casting solution (usually 8-15% by weight) was cast over a glass plate with the aid of a doctors knife to form a series of homogenous symmetrical films (about 15-50 µm). For this purpose an amount of casting polymer was dissolved under agitation at raised temperature. Prior to casting, the casting solution was filtered through a pressure filter at 4 bar. The polymer solution was then left overnight in order to let air bubbles escape. The cast films (casting thickness: 150-250) were dried for about 1 hour in an oven without air circulation at a suitable temperature and finally for 16 hours at a higher temperature in order to remove the remaining solvent rests. The films were easy to remove from the glass plate with the aid of the capillary force of water (or other non-solvent for the polymer).

To obtain high-quality polymer films it is very important to carefully clean the glass plate. To this end the glass plate was first cleaned with a detergent and water and subsequently with reversed osmosis water. The glass plate was then sprayed with ethanol and left to dry at room temperature with the casting side facing down in order to avoid dust impurities.

Before the glass plate was used the casting side was cleaned with a soft paper tissue moistened with ethanol. The plates should be cleaned from the top downward, catching the dust at the base. The plate was then wiped dry with a fresh paper tissue by the same wiping movement. The glass plate was then placed into a casting box onto four carriers, with the casting side facing upward and after about 15 minutes it was used for casting. The casting box should be as clean as possible and should be sealed. The bottle containing the filtered polymer solution and the doctors knife were also put into the casting box.

Composite membranes were cast by means of a motorized bar coater, a commercially available K Control Coater from RK Print Coat Instruments Ltd., South View Laboratories, Litlington, Royston, Herts. U.K.

A wire rod was used to spread a certain amount of polymer solution on to a carrier membrane which in turn was carried by a foamed rubber base. A number of rods was available yielding a wet coating of 4-500 microns. The maximum coating surface is about 350 x 475 mm; substrate size 350 x 535 mm.

The invention will now be further elucidated by the following non-limitative examples.

Example I

10 g of aromatic polyester obtained by reacting terephthaloyl chloride with bisphenol **1** (4X-BPN with X = Br), was dissolved under stirring in 90 g of chloroform by boiling for 3 hours at 70°C. After cooling, the solution was filtered under pressure (4 bar) over a 10 µm polypropylene filter (Gelman). After standing overnight, the solution was cast with a doctors knife onto a glass plate. After the film was cast, it was put into an oven without air circulation and left for 4 hours at 70°C and then for 24 hours at room temperature. The membrane was removed from the glass plate by immersion in water and subsequently dried in the open air.

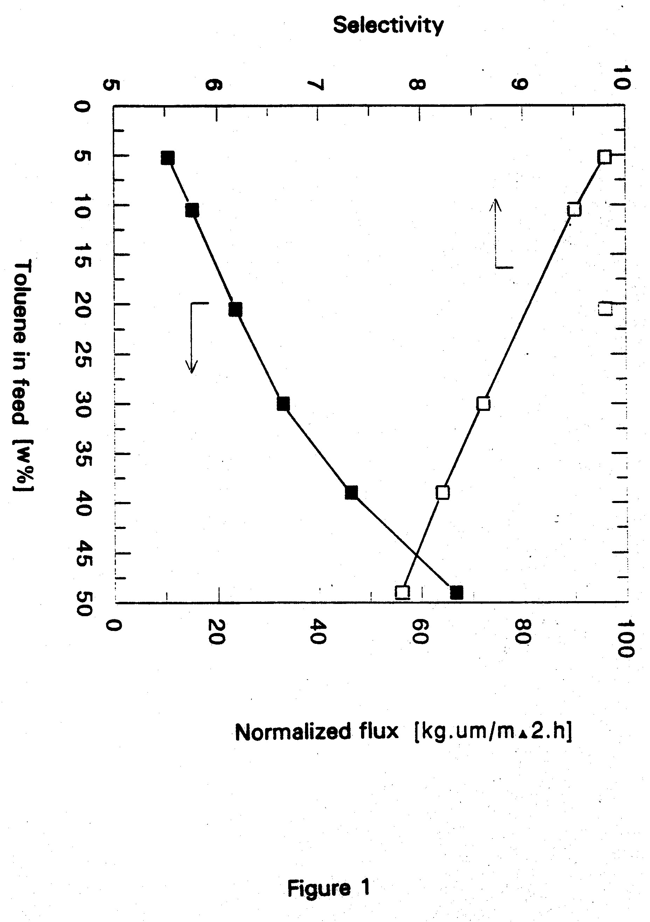

The pervaporation properties of the 45 µm thick membrane were determined at 90°C for a mixture of toluene and iso-octane consisting of 5-50% by weight of toluene. Prior to measuring, the membrane was conditioned in a mixture of 5% by weight of toluene and 95% by weight of iso-octane for 24 hours at 90°C. The results of the pervaporation experiments are given in Figure 1.

Figure 1 shows that as the content of toluene in the feed flow increases, the normalized flux increases, while the separation factor decreases.

Example II

For the preparation of a membrane film from the aromatic polyester obtained by reacting terephthaloyl chloride with bisphenol **2** (4X-BPT with X = Br), the procedure of Example I was applied. The thickness of the membrane was 45 µm.

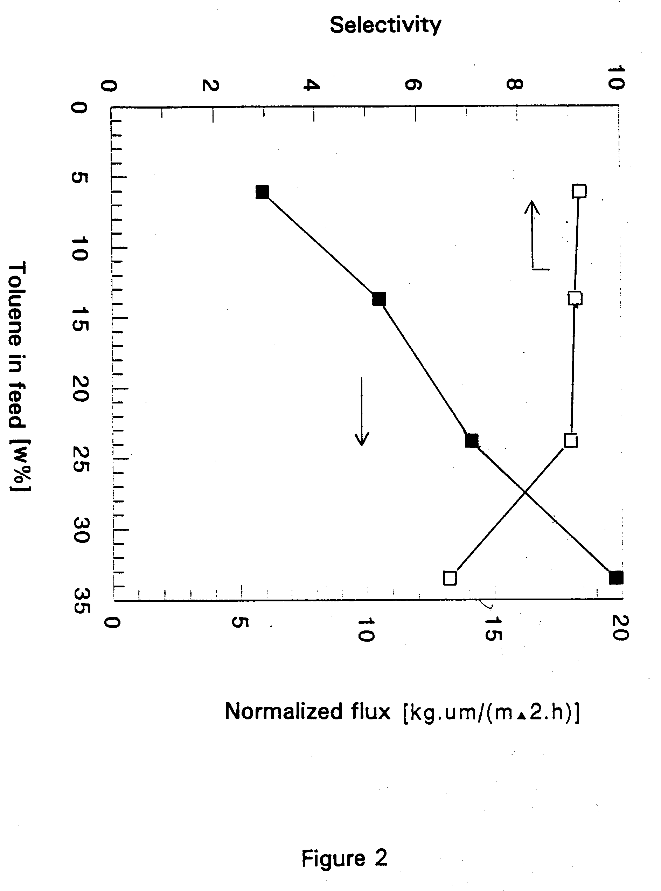

After conditioning for 24 hours at 90°C in a mixture of 5% by weight of toluene and 95% by weight of iso-octane, the pervaporation properties of the membrane were determined at 90°C for a mixture of toluene and iso-octane consisting of 6-33% by weight of toluene. The results are given in Figure 2.

Figure 2 shows how the toluene content in the feed flow affects the normalized flux and separation factor.

Example III

For the preparation of a membrane film from the aromatic polyester obtained by reacting 5-t-butylisophthaloyl chloride with bisphenol **2** (4X-BPT with X = Br), the procedure of Example I was applied. The thickness of the membrane was 45 µm.

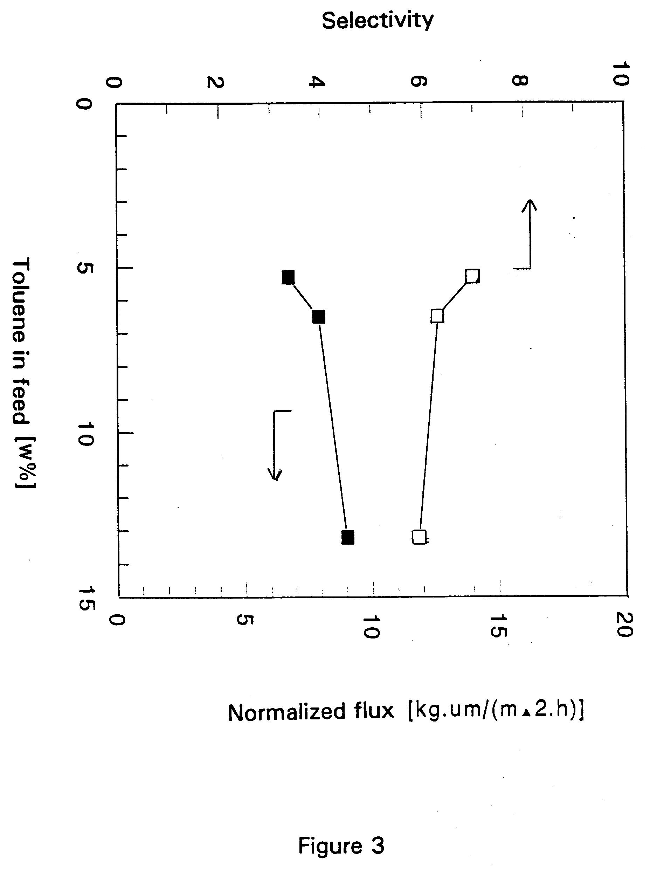

The pervaporation properties of the membrane were determined as in Example II. The results are given in Figure 3.

Figure 3 shows that as the content of toluene in the feed flow increases, the normalized flux increases, while the separation factor decreases.

## Example IV

For the preparation of a membrane film from the aromatic polyester obtained by reacting a mixture of terephthaloyl chloride and isophthaloyl chloride (50/50 mol/mol) with bisphenol **2** (4X-BPT with X = H), the procedure of Example I was applied. The thickness of the membrane was 55 µm.

The pervaporation properties of the membrane were determined in accordance with Example I at 90°C for a mixture of 24.7% by weight of toluene and 75.3% by weight of isooctane, resulting in a separation factor of 6.7 and a normalized flux of 5.3 kg.µm.m$^{-2}$.hour$^{-1}$. If the toluene content in the feed flow was ≤14% by weight, there was no perceptible flux.

## Comparative Example IVa

For the preparation of a membrane film from the aromatic polyester obtained by reacting a mixture of terephthaloyl chloride and isophthaloyl chloride (50/50 mol/mol) with bisphenol **1** (4X-BPN with X = H), the procedure of Example I was applied. A 53 µm thick membrane thus prepared did not exhibit any solvent flux under the pervaporation conditions of Example IV.

The Examples IV and IVa show how the selected bisphenol affects the solvent flux.

## Example V

For the preparation and characterization of a membrane film from the aromatic polyester obtained by reacting PIDA with bisphenol **2** (4X-BPT with X = Br), the procedure of Example I was applied. The pervaporation properties of the 50 µm thick membrane were determined at 90°C for a mixture of 6.5 % by weight of toluene and 93.5% by weight of iso-octane, resulting in a separation factor of 18.8 and a normalized flux of 1.5 kg.µm.m$^{-2}$.hour$^{-1}$.

The pervaporation properties of the 42 µm thick membrane were determined at 90°C for a mixture of 19.85% by weight of toluene and 80.15% by weight of iso-octane, resulting in a separation factor of 13.3 and a normalized flux of 5.3 kg.µm.m$^{-2}$.hour$^{-1}$.

Examples II, III, and V show how, at the same feed flow, the selected aromatic diacid chloride affects the separation factor.

## Example VI

For the preparation and characterization of a membrane film from the aromatic polyester obtained by reacting a mixture of terephthaloyl chloride with bisphenol **3** (4X-BPI with X = Br), the procedure of Example I was applied. The membrane was 50 µm thick.

The pervaporation properties of the membrane were determined at 90°C for a mixture of 5% by weight of toluene and 95% by weight of iso-octane, resulting in a separation factor of 6 and a normalized flux of 8.6 kg.µm.m$^{-2}$.hour$^{-1}$.

## Example VII

For the preparation and characterization of a membrane film from the aromatic polyester obtained by reacting a mixture of terephthaloyl chloride and isophthaloyl chloride (50/50 mol/mol) with bisphenol **3** (4X-BPI with X = Cl), the procedure of Example I was applied. The membrane was 52 µm thick.

The pervaporation properties of the membrane were determined at 90°C for a mixture of 5% by weight of toluene and 95% by weight of iso-octane, resulting in a separation factor of 5.4 and a normalized flux of 9.4 kg.µm.m$^{-2}$.hour$^{-1}$.

## Examples VIIIb-d

2 g of aromatic polyester formed by reacting 2',5'-dihexenyloxy-terephthaloyl chloride with hydroquinone were dissolved under stirring in 90 g chloroform by boiling for 3 hours at 70°C. After cooling the solution was filtered under pressure (4 bar) over successively a prefilter (type GF-92, Schleicher and Schuell) and a filter having a pore size of 5 µm (type LS from Millipore). Then the polymer solution was evaporated under a nitrogen atmosphere to about 4% by weight to increase the viscosity of the casting solution. After standing overnight the solution was cast with a doctors knife having an opening of 1000 µm onto a glass plate. After the film was cast, it was left in an oven without air circulation at 70°C for 4 hours, and then for 24 hours at room temperature. The membrane was removed from the glass plate by immersion in a water bath. After that the membrane was dried in the open air. The membrane was modified by electron irradiation using a 175 kV Electrocurtain Electron Beam system (ESI, Model CB 150/15/180L). The sample was irradiated in discrete steps with doses up to 189 Mrad. As the maximum irradiation dose per run was 30 Mrad, several successive runs were necessary.

The pervaporation properties of the membrane were determined at 90°C for a mixture of 5% by weight of toluene and 95% by weight of iso-octane. Prior to measuring the membrane was conditioned in this toluene/iso-octane mixture for 24 hours at 90°C. The results of the pervaporation experiments are given in Table A.

Comparative Example VIIIa

The procedure of Example VIII was repeated, except that the membrane was not modified by electron irradiation. The membrane disintegrated under the pervaporation conditions as described in Example VIII.

Table A

| Example | Electron irradiation [Mrad] | Film thickness [$\mu$m] | Normalized flux [kg.$\mu$m.m$^{-2}$hour$^{-1}$] | $\beta$ (toluene/i-octane) |
|---------|------------------------------|--------------------------|--------------------------------------------------|-----------------------------|
| VIIIa | - | 30 | disintegration | |
| VIIIb | 24 | 30 | 3,6 | 21,3 |
| VIIIc | 74 | 25 | 2,2 | 20,7 |
| VIIId | 189 | 25 | 1,8 | 35,9 |

Comparison of the Examples VIIIb-d and VIIIa shows the favourable effect of electron irradiation of the membrane on the separation factor.

Example IX

For the preparation of a membrane film from the aromatic polyester obtained by reacting 2',5'-didodecylterephthaloyl chloride with hydroquinone the procedure of Example VIII was applied. After modification by irradiation with 175 Mrad electrons the membrane had a thickness of 45 $\mu$m.

After conditioning for 24 hours at 90°C in the feed mixture, the pervaporation properties of the membrane were determined at 90°C for a mixture of 5% by weight of toluene and 95% by weight of iso-octane, resulting in a separation factor of 2.4 and a normalized flux of 114 kg.$\mu$m.m$^{-2}$.hour$^{-1}$.

Comparative Example IXa

The procedure of Example IX was repeated, except that the membrane was not modified by electron irradiation. The membrane disintegrated under the pervaporation conditions as described in Example VIII.

Comparison of the Examples IX and IXa shows the favourable effect of electron irradiation of membranes on the separation factor.

Example X

For the preparation of a membrane film from the aromatic polyester obtained by reacting 2',5'-(6-(pentyloxy)hexoxy)terephthaloyl chloride with hydroquinone the procedure of Example VIII was applied. After modification by irradiation with 90 Mrad electrons the membrane had a thickness of 45 $\mu$m.

After conditioning for 24 hours at 90°C in the feed mixture, the pervaporation properties of the membrane were determined at 90°C for a mixture of 5% by weight of toluene and 95% by weight of iso-octane, resulting in a separation factor of 3.8 and a normalized flux of 110 kg.$\mu$m.m$^{-2}$.hour$^{-1}$.

Example XI

For the preparation of a membrane film from the aromatic polyester obtained by reacting 2',5'-dihexyl-$p$-terphenyl-4,4"-dicarboxylic acid dichloride with 2',5'-dihexyl-$p$-terphenyl-4,4"-diol the procedure of Example I was applied. The membrane had a thickness of 10 $\mu$m.

The pervaporation properties of the membrane were determined as in Example X, resulting in a separation factor of 4 and a normalized flux of 32 kg.$\mu$m.m$^{-2}$.hour$^{-1}$

Examples XIIa-d

For the preparation of a membrane film from the aromatic polyester obtained by reacting terephthaloyl chloride with 2',5'-dihexyl-*p*-terphenyl-4,4"-diol the procedure of Example I was applied. The membrane was modified by thermal treatment at 180°C under vacuum for 40 hours.

The pervaporation properties of the membrane were determined at 90°C for a mixture of toluene and iso-octane consisting of 5-20% by weight of toluene. Prior to measuring the membrane was conditioned in this toluene/iso-octane mixture for 24 hours at 90°C. The results are given in Table B.

Comparative Examples XIIe-f

The procedure of Example XII was repeated, except that the membrane received no thermal treatment. The results are given in Table B.

Table B

| Example | Film thickness [$\mu$m] | Benzene content in feed [% by weight] | Normalized flux [kg.$\mu$m.m$^{-2}$.h$^{-1}$] | $\beta$ (toluene/i-octane) |
|---|---|---|---|---|
| XIIa | 45 | 4,5 | 2,0 | 21,9 |
| XIIb | 45 | 10,3 | 3,8 | 19,8 |
| XIIc | 45 | 18,4 | 10,5 | 15,8 |
| XIId | 45 | 19,6 | 10,3 | 15,2 |
| XIIe | 10 | 5 | 8,1 | 7,5 |
| XIIf | 37 | 8,8 | 18,8 | 13,3 |

Examples XIIa-b and XIIe-f show the favourable effect of modification of the membrane by heat treatment under vacuum on the separation factor.

Example XIII

For the preparation of a membrane film the procedure of Example XII was applied, except that the membrane was modified by thermal treatment under atmospheric conditions at 180°C for 40 hours. The results of the pervaporation experiments regarding the 30 $\mu$m thick membrane at 90°C for a mixture of toluene and iso-octane consisting of 10-20% by weight of toluene are given in Table C.

Table C

| Example | Toluene Content in feed [% by weight] | Normalized flux [kg.$\mu$m.m$^{-2}$.h$^{-1}$] | $\beta$ (toluene/i-octane) |
|---|---|---|---|
| XIIIa | 9,9 | 0,3 | 146 |
| XIIIb | 19,9 | 0,5 | 88 |

Comparison of the results from Examples XIIf and XIIIa shows that modification of the membrane by thermal treatment under atmospheric conditions has a significant effect on the separation factor and the normalized flux.

Example XIV

For the preparation of a membrane film from the aromatic polyester obtained by reacting terephthaloyl chloride with 2',5'-dodecyl-*p*-terphenyl-4,4"-diol the procedure of Example I was applied. The 35 $\mu$m thick membrane was modified by thermal treatment at 180°C under vacuum for 40 hours.

The pervaporation properties of the membrane were determined at 90°C for a mixture of 5% by weight of toluene and 95% by weight of iso-octane, resulting in a separation factor of 5.4 and a normalized flux of 33 kg.$\mu$m.m$^{-2}$.hour$^{-1}$.

Example XV

*Preparation of a composite support membrane*. A casting solution consisting of 14% by weight of a polyimide (Lenzing P84) in dimethylformamide was applied onto a moving non-woven polyester web. The casting speed was 1.7 m/min. and the slit width of the casting knife was 300 μm. The cast solution was fed into demineralized water in which the microporous support membrane was formed. The membrane was collected onto a roll and the membrane was washed in water in order to remove any residual solvent. The membrane had a clean water flux of 400 $L.m^{-2}.hour^{-1}.bar^{-1}$ at 25°C and a reduced permeability for $N_2$ of $18-20*10^{-6}$ $mol.m^{-2}.s^{-1}.Pa^{-1}$ at 30°C.

*Preparation of a composite membrane*. A 3.5% by weight solution of the aromatic polymer, formed by reacting terephthaloyl chloride with 2',5'-dihexyl-*p*-terphenyl-4,4''-diol, in chloroform was spread with a so-called bar coater (RK Print-Coat Instruments Ltd., Litlington, Royston, Herts. U.K.) by means of a wire rod onto the above-mentioned support membrane which in turn was supported by a foamed rubber base. The maximally coated surface was 35 cm x 47.5 cm. The composite membrane was then dried in an oven without air circulation at 70°C for 4 hours and subsequently for 24 hours at room temperature. Then the membrane was thermally treated at 180°C under atmospheric conditions for 4 hours.

The pervaporation properties of the membrane were determined at 90°C for a mixture of toluene and iso-octane comprising 20.1% by weight of toluene. Prior to measuring the membrane was conditioned in a mixture of 10% by weight of toluene and 90% by weight of iso-octane for 16 hours. The results are given in Table D.

Example XVIa-b

For the preparation of a membrane film of a composite membrane comprising as top layer the aromatic polyester obtained by reacting terephthaloyl chloride with 2',5'-didodecyl-*p*-terphenyl-4,4''-diol the procedure of Example XV was applied. The composite membrane was modified by thermal treatment at 180°C under atmospheric conditions for 40 hours.

The results of the pervaporation experiment at 90°C for a mixture of toluene and 95% by weight of iso-octane consisting of 9-20% by weight of toluene are given in Table D.

Example XVII

The composite membrane from Example XV was tested in a pervaporation experiment at 70°C for a mixture of benzene and cyclohexane containing 5-18% by weight of benzene. The results are given in Table E.

Table D

| Example | Calculated thickness of top layer [μm] | Permeate Pressure [mbar] | Toluene content in feed [% by weight] | Total flux [$kg.m^{-2}.h^{-1}$] | β (toluene/i-octane) |
|---|---|---|---|---|---|
| XV | 6 | 1,6 | 20,1 | 0,2 | 34 |
| XVIa | 3 | 2,4 | 19,5 | 0,46 | 9,8 |
| XVIb | 3 | 2,4 | 9,2 | 0,39 | 10,0 |

Table E

| Example | Calculated thickness of top layer [μm] | Permeate pressure [mbar] | Benzene content in feed [% by weight] | Total flux [$kg.m^{-2}.h^{-1}$] | β (benzene/cyclohexane) |
|---|---|---|---|---|---|
| XVIIa | 6 | 1,9 | 18 | 0,06 | 9,2 |
| XVIIb | 6 | 0,6 | 5,2 | 0,03 | 8,6 |

**Claims**

1. A membrane for the separation of aromatic hydrocarbons from a mixture of various aromatic hydrocarbons or from a mixture of such aromatic hydrocarbons and non-aromatic hydrocarbons **characterized** in that the membrane is formed from aromatic polyesters on the basis of aromatic diacid chlorides in combination with either bisphenol-A-like bisphenols, or a bisphenol which is completely built up of aromatic centres.

2. A membrane according to claim 1 **characterized** in that the membrane is formed from aromatic polyesters on the basis of aromatic diacid chlorides such as terephthaloyl chloride, isophthaloyl chloride, 5-t-butylisophthaloyl chloride, or PIDA in combination with bisphenol-A-like bisphenols, such as 4X-BPN, 4X-BPT, 4X-BPI.

3. A membrane according to claim 1 **characterized** in that the membrane is formed from aromatic polyesters having a backbone based on one or more phenyl centres having flexible side chains.

4. A membrane according to claim 1 or 3, **characterized** in that the flexible side chain consists of $C_1$-$C_{12}$ alkyl or $C_1$-$C_{12}$ alkoxy groups having one or more hydrogen atoms such as O and S in the alkyl chain.

5. A membrane according to claims 1 or 3-4, **characterized** in that the aromatic polyester with backbone is formed from hydroquinone and aromatic diacid chlorides such as 2,5-di$C_1$-$C_{12}$ alkoxyterephthaloyl chloride with hexyloxy, 1-hexenyloxy, dodecyloxy or 6-(pentyloxy)hexyloxy side chains.

6. A membrane according to claims 1, or 3-4, **characterized** in that the aromatic polyester with backbone is formed from aromatic diols (hydroquinone, 2',5'-di$C_1$-$C_{12}$ alkyl-$p$-terphenyl-4,4"-diol) or 2',5'-di$C_6$-$C_{12}$ alkyl-$p$-terphenyl-4,4"-dicarboxylic acid chloride.

7. A membrane according to claims 1-6, **characterized** in that the membrane is modified by thermal treatment or irradiation.

8. A membrane according to claim 5 or 6, **characterized** in that the membrane is modified by electron irradiation.

9. A membrane according to claim 5 or 6, **characterized** in that the membrane is modified by thermal treatment up to 100-180°C.

10. A membrane according to claim 9, **characterized** in that the thermal treatment is carried out under vacuum or atmospheric conditions.

11. A membrane according to claims 1-10, **characterized** in that the membrane is a composite membrane, in which the membrane is applied to a carrier which, with regard to the mixture to be separated, is an inert carrier.

12. A membrane according to claim 11, **characterized** in that the inert carrier is an aromatic polyamide, polyimide or polyetheramide material.

13. A membrane according to claim 12, **characterized** in that the carrier is applied to an inert non-woven such as PET, PP and preferably PPS.

14. A method for the separation of aromatic hydrocarbons from a mixture of various aromatic hydrocarbons or from a mixture of such aromatic hydrocarbons and non-aromatic hydrocarbons **characterized** in that the mixture is brought into contact with the permselective side of a membrane in accordance with any of the preceding claims 1-13 under pervaporation conditions or under perstraction conditions.

15. A method according to claim 14, **characterized** in that basically mixtures were used containing at least 1% by weight aromatic hydrocarbons.

16. A method according to claim 14 or 15 **characterized** in that the aromatic hydrocarbons separated from the mixtures are benzene, alkyl aromatics such as toluene, etc.

17. A method for the formation of membranes according to claims 1-13 **characterized** in that this is carried out by a method of the prior art.

Figure 1

Figure 2

Selectivity

Toluene in feed [w%]

Normalized flux [kg.um/(m▲2.h)]

Figure 3

EP 0 760 251 A1

European Patent Office

**EUROPEAN SEARCH REPORT**

Application Number

EP 96 20 2343

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | US-A-5 012 036 (SARTORI) <br><br> * the whole document * | 1,7,9, 10,14-17 | B01D71/48 <br> B01D61/36 <br> C10G31/11 |
| A | | 11-13 | |
| X | US-A-5 013 332 (SURNAMER) <br><br> * the whole document * | 1,2,7,9, 10,17 | |
| X | EP-A-0 419 926 (BAYER AG) <br> * claim * <br> * page 4, line 18 - line 19 * <br> * page 16, line 42 * | 1,2,17 | |
| D,X | US-A-5 007 945 (CHAO-FONG TIEN) <br><br> * abstract; claims 1,3,4,6,7 * <br> * column 2, line 46 - column 3, line 63 * <br> * examples II-IV * | 1,2,7,9, 10,17 | |
| X | JOURNAL OF POLYMER SCIENCE: PART B: POLYMER PHYSICS, <br> vol. 32, 1994, NEW-YORK, USA, <br> pages 851-857, XP002004376 <br> J. A. H. M. BUIJS: "Liquid Crystalline Main Chain Polymers with a Poly(p-Phenylene-terephthalate) Backbone: 7." <br> * abstract * <br> * schema 1 * <br> * page 853, column 1, paragraph 2 * <br> * page 856, column 1, last paragraph * <br><br> -/-- | 1,3-5,7, 9,10,17 | **TECHNICAL FIELDS SEARCHED** (Int.Cl.6) <br><br> B01D <br> C10G |

The present search report has been drawn up for all claims

| Place of search | Date of completion of the search | Examiner |
|---|---|---|
| THE HAGUE | 1 October 1996 | Hoornaert, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

| | European Patent Office | EUROPEAN SEARCH REPORT | Application Number EP 96 20 2343 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | MAKROMOL. CHEM., vol. 193, 1992, BASEL, CH, pages 11-30, XP002004377 C. SCHRAUWEN: "Structure and mechanical properties of films of rigid-rod polymers having flexible side chains" * abstract; table 1 * * page 12, line 1 - page 16, paragraph 1 * --- | 1,3-5,7, 9,10,17 | |
| X | MAKROMOL. CHEM., vol. 193, 1992, BASEL, CH, pages 1031-1041, XP002004378 J. K. KALLITSIS: "Synthesis and properties of polyesters derived from 2',5'-dialkyl-p-terphenyl-4,4''-diol" * abstract * * page 1032, paragraph 2 - page 1035 * * page 1040, last paragraph * ----- | 1,6,7,9, 10,17 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 1 October 1996 | Hoornaert, P |

EPO FORM 1503 03.82 (P04C01)